# EUROPEAN PATENT APPLICATION

(11) **EP 3 716 139 A1**
(43) Date of publication of application: **30.09.2020**
(21) Application number: 19196791.8
(22) Date of filing: 11.09.2019
(51) Int. Cl.: G06K 9/00, G06K 9/44

(54) **METHOD OF DETECTING DEFECTS ON FACE AUTOMATICALLY**

(30) Priority: 29.03.2019 CN 201910249902
(71) Applicant: CAL-COMP BIG DATA, INC, Shenkeng, New Taipei City 222 (TW)
(72) Inventor: LIN, Yung-Hsuan, 222 New Taipei City (TW)
(74) Representative: 2K Patentanwälte Blasberg Kewitz & Reichel

(57) **Abstract**

A method of detecting defects on face automatically is provided and applied to a smart mirror apparatus (1) having an image capture module (12), a mirror (16) and a processing unit (10). The method is to capture a facial image (30) of a user (2) when the user (2) stands in front of the mirror (16), generate a smooth image according to the facial image (30) by the processing unit (10), generate a surface variation image (70) according to a difference between the two images, recognize and record defect in the surface variation image (70). Therefore, the defect position in the face can be automatically and accurately detected.

## Description

### BACKGROUND OF THE INVENTION

### Field of the Invention

The technical field relates to automatic detection and more particularly related to a method of detecting defects on face automatically.

### Description of Related Art

For women, makeup is almost one of the actions needing to be performed every day.

Before putting on the makeup of face, people usually do the concealer action at the position of the defect (such as speckle or scar).

However, the position of each defect can only be observed and confirmed by the user's eyes. Thus, some inexperienced users usually feel troubled about none of the ability to correctly determine the position of each defect.

Accordingly, there is currently a need for an auxiliary device having an ability to assist the users in confirming the position of each defect efficiently, and assist the inexperienced users in quick and correct make-up.

### SUMMARY OF THE INVENTION

The disclosure is directed to a method of detecting defects on face automatically has an ability to detect defects on face automatically defect detection base on the surface variation image of the user.

One of the exemplary embodiments, a method of detecting defects on face automatically, the method is applied to a smart mirror apparatus comprising an image capture module and a processing unit, the method comprises following steps: capturing a facial image of a user by the image capture module when the user is standing in front of the smart mirror apparatus; executing a first smoothing process on the facial image by the processing unit for generating a smooth image; generating a surface variation image according to a difference between the facial image and the smooth image; and, executing a process of detecting defects on the surface variation image for recognizing at least one defect in the surface variation image, and recording a position of each defect.

The present disclosed example can automatically and accurately detect the defect position in the face.

### BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:
FIG. 1 is an architecture diagram of a smart mirror apparatus according to one embodiment of the present disclosed example;
FIG. 2 is a schematic view of an appearance of a smart mirror apparatus according to one embodiment of the present disclosed example;
FIG. 3 is a flowchart of a method of detecting defects on face automatically according to the first embodiment of the present disclosed example;
FIG. 4 is a flowchart of applying detection result according to the second embodiment of the present disclosed example;
FIG.5 is a flowchart of a process of concealing defects according to the third embodiment of the present disclosed example;
FIG.6A is a first flowchart of a method of detecting defects on face automatically according to the fourth embodiment of the present disclosed example;
FIG.6B is a second flowchart of a method of detecting defects on face automatically according to the fourth embodiment of the present disclosed example;
FIG. 7 is a usage schematic view of a smart mirror apparatus according to a one embodiment of the present disclosed example;
FIG. 8 is a schematic view of a face analysis process according to one of the embodiments of the present disclosed example;
FIG. 9 is a schematic view of a function of marking defects according to one of the embodiments of the present disclosed example;
FIG. 10 is a schematic view of a function of concealing defects according to one of the embodiments of the present disclosed example;
FIG. 11 is a first processing schematic view of a function of concealing defects according to one of the embodiments of the present disclosed example; and
FIG. 12 is a second processing schematic view of a function of concealing defects according to one of the embodiments of the present disclosed example.

### DETAILED DESCRIPTION OF THE INVENTION

In cooperation with attached drawings, the technical contents and detailed description of the present disclosed example are described thereinafter according to some exemplary embodiments, being not used to limit its executing scope. Any equivalent variation and modification made according to appended claims is all covered by the claims claimed by the present disclosed example.

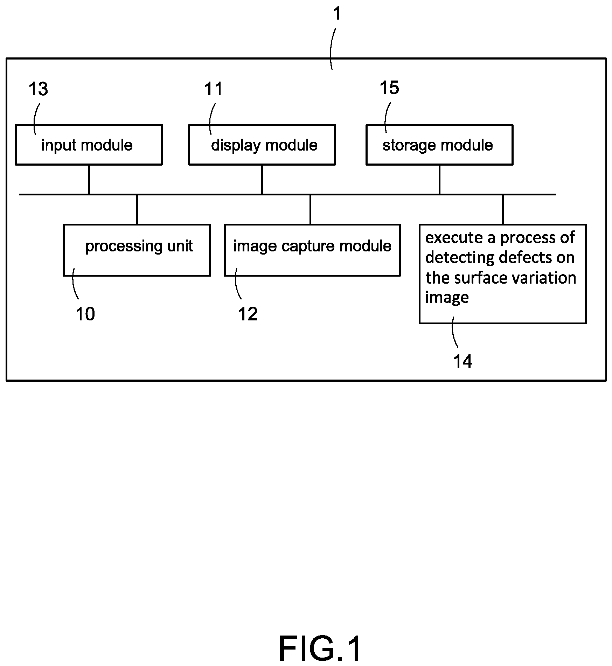

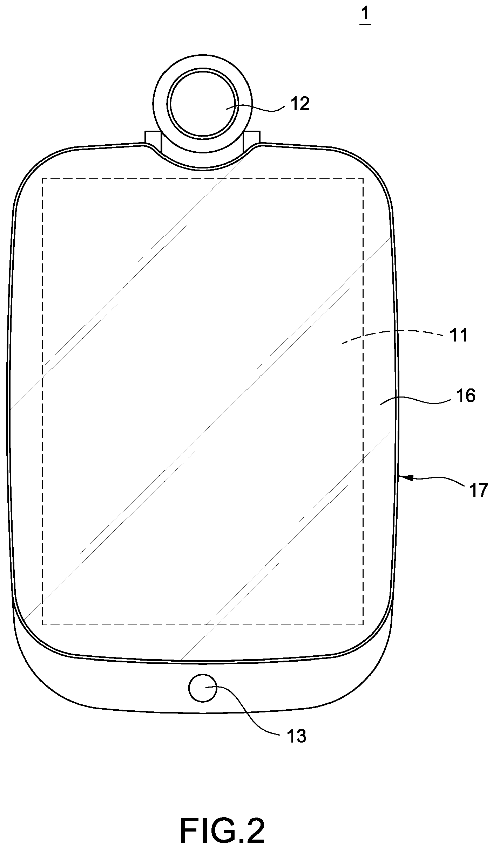

Please refer to FIG. 1 and FIG. 2 simultaneously, FIG. 1 is an architecture diagram of a smart mirror apparatus according to one embodiment of the present disclosed example, and FIG. 2 is a schematic view of an appearance of a smart mirror apparatus according to one embodiment of the present disclosed example.

The present disclosed example discloses a smart mirror apparatus 1, the smart mirror apparatus 1 is mainly applied to a method of detecting defects on face automatically (referred to as the detecting method in the following description), the detecting method has an ability to automatically detect each type of defects on the face and record a position of each defect. Furthermore, the smart mirror apparatus 1 may further apply the position of each defect being recorded to providing information to the user, such as a function of marking defects or a function of concealing defects described later.

Please be noted that most of the defect-detecting of the related art is configured to directly execute a detection for defect images on the captured color image. Because there is too much information in the color image, such as color information and high-frequency information, above-mentioned information will become the noises during the detection, and reduce the accuracy and process speed of the detection.

For solving the above-mentioned problem, a technology of detecting defects being innovative and progressive has been provided by the present disclosed example. Above technology of detecting defects is first to execute a comprehensive process on the captured color facial image for obtaining a smooth image without defect or with only the defect(s) being concealed, generate a surface variation image according to a variation between the facial image and the smooth image (such as executing a process of image subtraction), and execute the defect-detecting on the surface variation image. Because the most obvious variation between the facial image and the smooth image is that the color depths of the defect images or whether there is any defect image being comprised. The surface variation image generated by the variation between the facial image and the smooth image is without any noise or with extremely few noises because all or the most of the noises in the facial image and the smooth image cancel each other out by the image subtraction, and can be obviously represent the position and level (severity) of each defect image. Thus, the detection of facial defect of the present disclosed example can be with higher accuracy and faster processing speed.

As shown in FIG. 1, the smart mirror apparatus 1 of the present disclosed example mainly comprises a processing unit 10, a display module 11, an image capture module 12, an input module 13, a wireless transmission module 14 and a storage module 15. The processing unit 10, the display module 11, the image capture module 12, the input module 13, the wireless transmission module 14 and the storage module 15 are electrically connected to each other by at least one bus.

The display module (such as color LCD monitor) is used to display information. The image capture module 12 (such as camera) is used to capture the external images. The input module 13 (such as buttons or touch pad) is used to receive the user operation. The wireless transmission module 14 (such as Wi-Fi module, Bluetooth module or mobile network module, etc.) is used to connect to the network. The storage module 15 is used to store data. The processing unit is used to control each device of the smart mirror apparatus 1 to operate.

One of the exemplary embodiments, the storage module 15 may comprise a non-transient storage media, the non-transient storage media stores a computer program (such as firmware, operating system, application program or a combination of the above program of the smart mirror apparatus 1), the computer program records a plurality of corresponding computer-executable codes. The processing unit 10 may further implement the method of each embodiment of the present disclosed example via the execution of the computer-executable codes.

One of the exemplary embodiments, the smart mirror apparatus 1, such as a smartphone, a tablet, or an electronic signboard with a camera function, only has the ability to provide an electronic mirror function. More specifically, the image capture module 12 and the display module 11 are installed on the same side of the smart mirror apparatus 1, so as to make the user be captured and watch the display module 11 simultaneously. The smart mirror apparatus 1 may capture the external images (such as the facial image of the user) continuously by the image capture module 12 after the execution of the computer (such as an application program), execute the selectable process(es) on the captured images optionally, and display the captured (and processed) images by the display module 11 instantly. Thus, the user may see own electronic mirror in the display module 11.

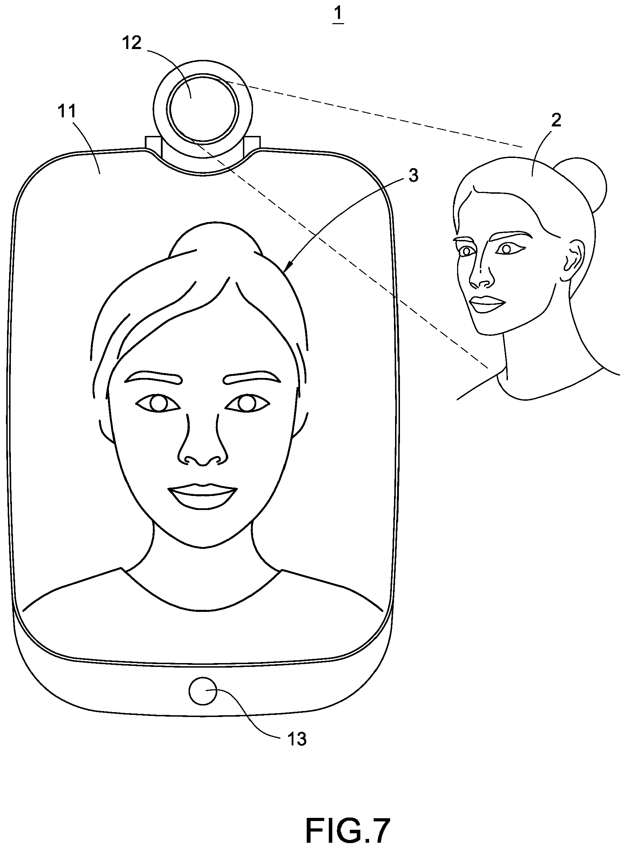

One of the exemplary embodiments, the smart mirror apparatus 1 may implement an optical mirror function and an electronic mirror function. FIG. 7 is a More specifically, please refer to FIG. 1, FIG. 2 and FIG. 7 simultaneously, FIG. 7 is a usage schematic view of a smart mirror apparatus according to one embodiment of the present disclosed example.

As shown in FIG. 2 the smart mirror apparatus 1 may further comprise a mirror glass 16 (such as the unidirectional glass) and a housing 17. The display module 11 is arranged in the housing 17 and on the rear of the mirror glass 16. Namely, the user doesn't have the ability to discover the existence of the display module 11 directly. Moreover, the image capture module 12 is arranged upon the mirror glass 16. The input module 13 comprises at least one physical button arranged on the front side of the smart mirror apparatus 1, but this specific example is not intended to limit the scope of the present disclosed example.

In this embodiment, when there is a need to implement the optical mirror function, the processing unit 10 turns the display module 11 off to make a luminance of the front side of the mirror glass 16 (namely, the side which the user is located) is brighter than a luminance of the back side of the mirror glass 16 (namely, the side which the display module 11 is arranged). Thus, the smart mirror apparatus 1 may be as a simple optical mirror and display the user's optical mirror image by reflection.

Furthermore, during implementing the optical mirror function, the processing unit 10 may control the display module 11 to display the additional information (such as weather information, date information, graphical user interface or the other information) in the designated region, such as the edge of the mirror glass 16 or the other region having a lower probability of overlapping the mirror image 3.

When there is a need to implement the electronic mirror function, the processing unit 10 may control the image capture module 12 to capture the user 2 in front of the smart mirror apparatus 1 continuously for generating the front mirror image comprising the image of the user 2 continuously, execute the process(es) on the captured front mirror images optionally (such as image correction, adding the additional information, and so on), turn the display module 11 on and control the display module 11 to display the processed images in real-time or near-real-time. Because of the luminance of the front side of the mirror glass 16 (namely, the side which the user is located) is darker than the luminance of the back side of the mirror glass 16 (namely, the side which the display module 11 is arranged), the user may see own electronic mirror image 3 displayed in the mirror glass 16.

Please be noted that the image capture module 12 is arranged upon the mirror glass 16, but this specific example is not intended to limit the scope of the present disclosed example. The image capture module 12 may be arranged in any position of the smart mirror apparatus 1 according to the product demand, such as being arranged behind the mirror glass 16 for reducing the probability of the image capture module 12 being destroyed and making the appearance simple.

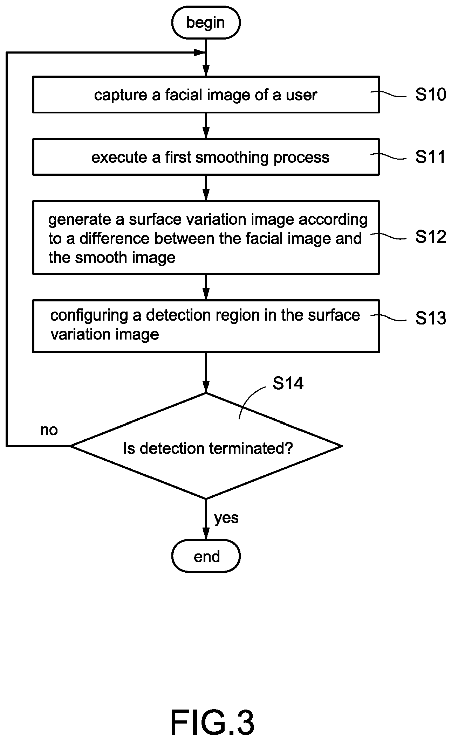

Please refer to FIG. 3 simultaneously, which is a flowchart of a method of detecting defects on face automatically according to the first embodiment of the present disclosed example. The method of detecting defects on face automatically of each embodiment of the present disclosed example may be implemented by the smart mirror apparatus shown in Fig. 1 and Fig. 2.

The method of detecting defects on face automatically of this embodiment mainly comprises following steps.

Step S10: the processing unit 10 controls the image capture module 12 to capture the facial image of the user.

One of the exemplary embodiments, the processing unit 10 captures the user's facial image when detection of the user is located in front of the smart mirror apparatus 1. More specifically, the processing unit 10 is configured to control the image capture module 12 to capture toward the front side of the mirror glass 16 continuously for continuously obtaining the front mirror images with a wider field of view and continuously executing detection on the front mirror images for determining whether there is any human being captured. The processing unit 10 may be configured to not execute the designated process on the front mirror image for saving the computing resource and preventing the redundant process from execution when there is no human being captured. When determining that someone is captured, the processing unit 10 may be configured to execute the recognition of facial position on the front mirror image (such as the half body image of the user), and crop the front mirror image into a facial image with a narrower field of view.

One of the exemplary embodiments, the processing unit 10 is configured to control the image capture module 12 to capture the human's face directly for obtaining the user's facial image, so as to omit the additional image-cropping process and obtain the facial image with a higher resolution.

Step S11: the processing unit 10 executes a smoothing process (namely, the first smoothing process) on the captured facial image for generating a smooth image. More specifically, above-mentioned smoothing process mainly filters all or part of the high-frequency part (such as the image detail and noise) out from the facial image, and remains the low-frequency part (such as the image contour).

Thus, the defects images (such as acne scars, freckles, and so on) in the facial image can be filtered out or brush down after execution of the smoothing process. Namely, the smooth image corresponds to the facial status of defectless or slight defect.

One of the exemplary embodiments, above-mentioned smoothing process may be the low-pass filtering process or the mean filtering process with the designated filter parameters.

Step S12: the processing unit 10 generates the surface variation image according to the difference between the facial image and the smooth image.

One of the exemplary embodiments, the processing unit 10 executes the image subtraction process on the facial image and the smooth image to obtaining above-mentioned surface variation image, such as subtracting the pixel value of each pixel of on one image from the pixel value of each pixel at the corresponding position of another image. Namely, the surface variation image represents the difference level between the two images.

Step S13: the processing unit 10 executes a process of detecting defects on the surface variation image for recognizing the defects in the surface variation image.

One of the exemplary embodiments, the processing unit 10 may firstly configure a detection region of the surface variation image, and execute the process of detecting defects only on the detection region of the surface variation image. Thus, the present disclosed example can narrow the area being necessary to detect, and shorten the detection time.

One of the exemplary embodiments, above-mentioned process of detecting defects is configured to determine whether there is any same-group image block having a deeper color (such as the difference between the pixel value of the facial image and the pixel value of the smooth image is greater than a default difference) and/or a wider range (such as the number of pixels is greater than a default pixel number), and configure this block as the position of the defect if there is any matched block.

Besides, when any defect is detected, the processing unit 10 may further record the position of each defect in the storage module 15 for subsequent application, such as the mode of marking defects or the concealing mode described later.

One of the exemplary embodiments, the processing unit 10 is configured to record each defect's position relative to the whole face, rather than the defect's position relative to the surface variation image. More specifically, the positions of the user appearing in front of the smart mirror apparatus 1 each time are different from each other (namely, the positions relative to the surface variation image of the facial region which the user appearing in front of the smart mirror apparatus 1 each time are different from each other. If only the position relative to the surface variation image of each defect is recorded, the processing unit 10 must re-execute the process of detecting defects when next time the user uses the smart mirror apparatus 1 because the position of the facial region has been changed.

Thus, by recording the position relative to the whole face of each defect, only the position of the facial region is necessary to be positioned for obtaining the position of each defect even the position of the facial region has been changed, and there is no need to re-execute the process of detecting defects.

Step S14: the processing unit 10 determines whether the process of detecting defects should be terminated, such as the user disables a function of detecting defects or turns the smart mirror apparatus 1 off.

If the processing unit 10 determines that the process of detecting defects should be terminated, finishes the execution of the method of detecting defects on face automatically.

Otherwise, the processing unit 10 performs the step S10 again for continuous detection.

Thus, the present disclosed example can automatically and accurately detect the defect position in the face.

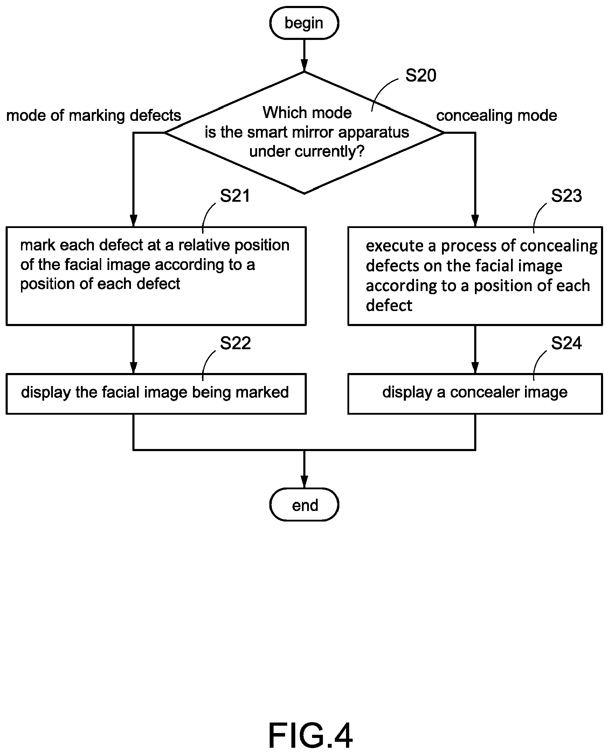

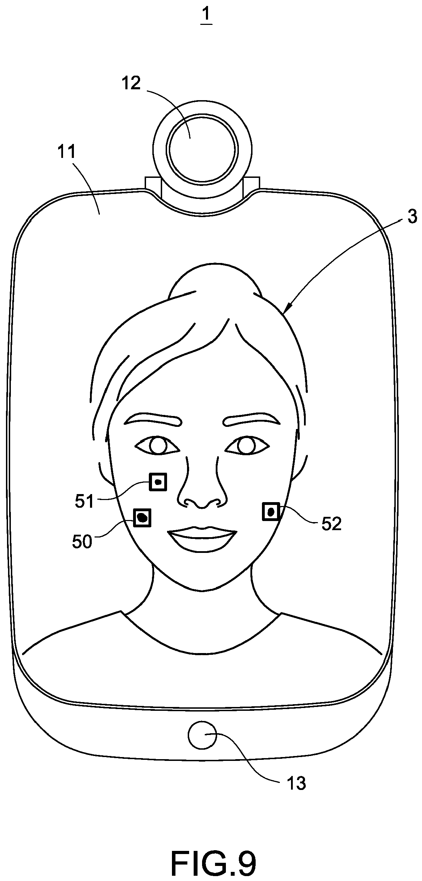

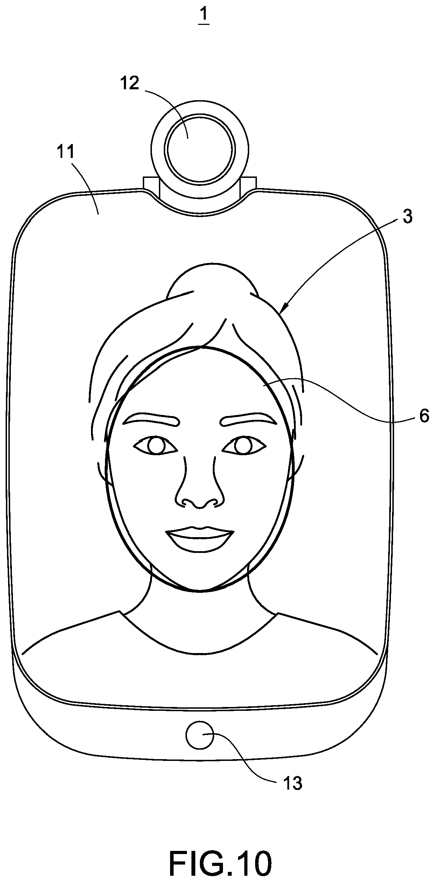

Please refer to FIG. 3, FIG. 4, FIG. 9 and FIG. 10 simultaneously, FIG. 4 is a flowchart of applying detection result according to the second embodiment of the present disclosed example, FIG. 9 is a schematic view of a function of marking defects according to one of the embodiments of the present disclosed example, and FIG. 10 is a schematic view of a function of concealing defects according to one of the embodiments of the present disclosed example.

This embodiment is a further application of the position of each defect obtained by the method of detecting defects on face automatically of the FIG. 3. In this embodiment, the display module 11 of the smart mirror apparatus 1 is arranged beside the mirror glass 16, and the screen pictures (such as the electronic mirror image) of the display module 11 appear on the mirror glass 16 by transmission.

More specifically, in this embodiment, the smart mirror apparatus 1 may implement a function of marking defects (implemented in the mode of marking defects described later) and a function of previewing the face after concealing (implemented in the concealing mode described later) based on the Augmented Reality (AR) technology. Compare to the method of detecting defects on face automatically of FIG. 3, the method of detecting defects on face automatically of this embodiment further comprises following steps.

Step S20: the processing unit 10 determines whether the smart mirror apparatus 1 is currently under the mode of marking defects or the concealing mode. More specifically, the user may operate the smart mirror apparatus 1 (such as inputting operation of pressing the button or touch control by the input module 13, or capturing a gesture by the image capture module 12 for inputting operation of gesture) to make the smart mirror apparatus switch between above-mentioned modes.

If the processing unit determines that the smart mirror apparatus 1 is currently under the mode of marking defects (or being switched to the mode of marking defects), the processing unit 10 performs the steps S21-S22.

If the processing unit determines that the smart mirror apparatus 1 is currently under the concealing mode (or being switched to the concealing mode), the processing unit 10 performs the steps S23-S24.

Step S21: the processing unit 10 under the mode of marking defects may mark each defect at a relative position of the facial image according to a position of each defect in the surface variation image.

One of the exemplary embodiments, as shown in FIG. 9 the processing unit 10 may generate the corresponding mark 51-52 (the style and size of each mark may be modified with the user's demand) according to size or range of each defect, determine a mark position of each defect 51-52 according to the defect position of each defect in the facial image, and make each mark 51-52 be added to the corresponding mark position in the facial image, so as to get the marked electronic mirror image 3.

Step S22: the processing unit 10 displays the marked facial image (such as marked electronic mirror image 3) by the display module 11.

Please be noted that, as shown in FIG. 9, when the user moves or a default time (such as 1/30 seconds) elapses, the processing unit 10 may determine the newest defect position of each defect in the facial image of the front mirror image photographed lastly, and perform the steps S21-S22 again for refreshing the display frames to achieve a display effect of augmented reality.

One of the exemplary embodiments, the processing unit 10 may immediately display the newest electronic mirror image 3 (namely the front mirror image with the wider field of view photographed lastly by the image capture module 12), calculate the mark position of each defect in the display module 11, and display the mark 51-52 of each defect at the corresponding mark position, so as to achieve the display effect of augmented reality.

Thus, the present disclosed example can instantly display the position and range of each defect, and the user can clearly understand the specific position and range of each defect. Even the user is inexperienced, the user can do a perfect process of concealing defects by the assistance of marks.

Step S23: the processing unit 10 under the concealing mode may execute the process of concealing defects on the facial image according to the position of each defect in the surface variation image for generating the concealer image.

One of the exemplary embodiments, as shown in FIG. 10 the processing unit 10 may execute a partial smoothing process on the facial image according to the defect position of each defect, such as execute a smoothing process (such as low-pass filtering or mean filtering) on the defect position of each defect in the facial image to obtain a simulation image 6 of simulating the effect of concealing the face. Then, the processing unit 10 may make the simulation image 6 be displayed by overlapping at the corresponding position of the electronic mirror image 3 according to the position of the facial image in the electronic mirror image 3 for obtaining the concealer image.

Step S24: the processing unit 10 control the display module 11 to display the concealer image.

Please be noted that, as shown in FIG. 10, when the user moves or a default time (such as 1/30 seconds) elapses, the processing unit 10 may determine the newest defect position of each defect in the facial image of the front mirror image photographed lastly, and perform the steps S23-S24 again for refreshing the display frames to achieve a display effect of augmented reality.

One of the exemplary embodiments, the processing unit 10 may immediately display the newest electronic mirror image 3 (namely the front mirror image with the wider field of view photographed lastly by the image capture module 12), generate the simulation image (namely the concealer image) 6 according to the newest facial image, and display the newest simulation image 6 by overlapping at the position of the facial image, so as to achieve the display effect of augmented reality.

Thus, the present disclosed example can instantly display the simulated concealer effect, and the user can clearly understand the appearance after concealer of the user. Even the user is inexperienced, the user can clearly understand the appearance after concealer without imaging.

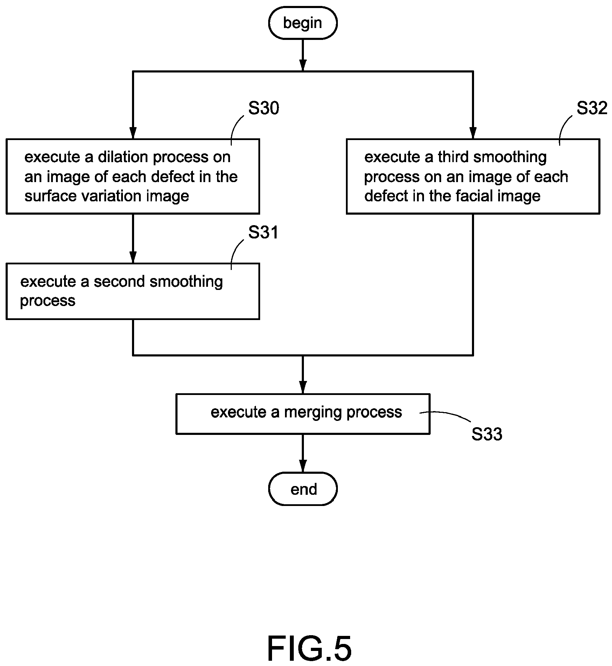

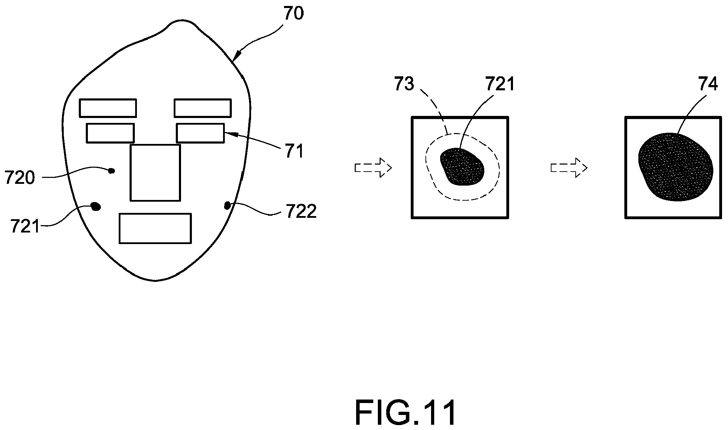

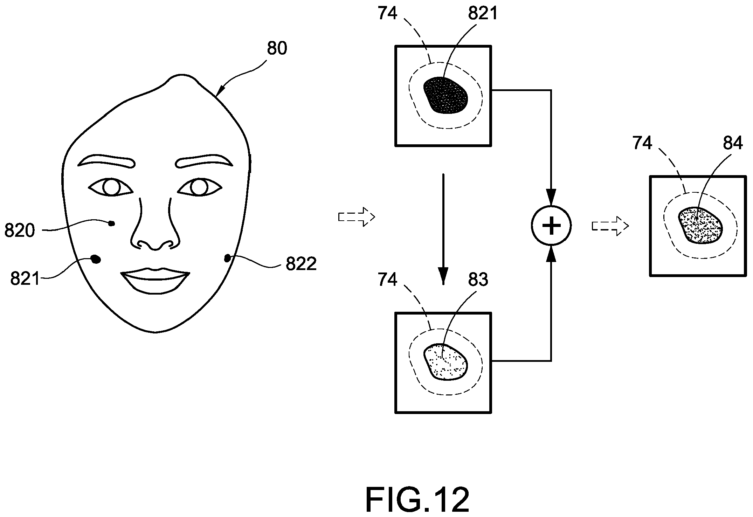

Please refer to FIG. 3-5, FIG. 11, and FIG. 12 simultaneously, FIG.5 is a flowchart of a process of concealing defects according to the third embodiment of the present disclosed example, FIG. 11 is a first processing schematic view of a function of concealing defects according to one of the embodiments of the present disclosed example, and FIG. 12 is a second processing schematic view of a function of concealing defects according to one of the embodiments of the present disclosed example.

This embodiment provides a scheme of the process of concealing defects of the step S23 shown in FIG. 4, the scheme comprises the following steps.

Step S30: the processing unit 10 retrieves above-mentioned surface variation image, and executes a dilation process on an image of each defect in the surface variation image for expanding an image area of each defect in the surface variation image.

One of the exemplary embodiments, as shown in FIG. 11, a detection region is configured in the surface variation image 70. Above-mentioned detection region has excluded a plurality of exclusion regions 71 (For example, the exclusion areas 71 may comprise the regions of the eyebrows, the eyes, the nose, and/or the mouth). The detection region comprises the remaining regions excluding the exclusion regions 71 from all of the regions in the surface variation image 70. The processing unit 10 recognizes each defect image 720-722 in the surface variation image 70 according to each defect position, and executes the process of concealing defects on each defect image 720-722 (taking execute the process on the defect image 721 for example).

More specifically, the processing unit executes the dilation process on the defect image 721 to expand the defect image 721 into the dilation defect image 73 having a bigger area.

Please be noted that, in the following merging process, the surface variation image can be used to indicate a range to be concealed, and above-mentioned dilation process is used to expand the range to be concealed for making the following merging process be configured to do the process simultaneously on the defect image and image around the defect image (namely the skin image without defect). Thus, the simulated concealer image will be looked more natural.

Step S31: the processing unit 10 executes a smoothing process (namely, the second smoothing process) on the image of each defect in the surface variation image which its area had been expanded (such as the dilation defect image 73) for smoothing the image of each defect in the surface variation image (such as the smooth defect image 74 shown in FIG. 11).

More specifically, above-mentioned smoothing process is mainly used to filter all or part of the high-frequency composition (namely the details of the defect) of each defect image out, and leave the low-frequency composition (namely the contour of the defect). Thus, the detail of the dilation defect image 73 will be filtered our or brush after above-mentioned smoothing process, and only the slight contour will be left.

One of the exemplary embodiments, in the step S12, the surface variation image may be generated by the gray-scale or halftone facial image and smooth image, namely, the surface variation image may be a gray-scale image or a halftone image.

Step S32: the processing unit 10 executes the smoothing process (namely the third smoothing process) on the image of each defect in the facial image for smoothing the image of each defect in the facial image.

One of the exemplary embodiments, as shown in FIG. 12, the smart mirror apparatus 1 may retrieve the color facial image 80, recognize the color defect images 820-822 in the color facial image 80, and respectively execute the smoothing process on each color defect image 820-822 (taking doing the color smoothing process on the color defect image 821 for example) for obtaining the color smooth defect image 83.

More specifically, above-mentioned smoothing process is mainly used to filter all or part of the high-frequency composition (namely the details of the color defect) of each defect image out, and leave the low-frequency composition (namely the contour of the color defect). Thus, the detail of the color defect image 820-822 will be filtered our or brush after above-mentioned color smoothing process, and only the slight contour will be left.

Please be noted that above-mentioned first smoothing process, second smoothing process and third smoothing process may comprise the same or different of low-pass filter process or mean filter process (such as using the same or different filter), but this specific example is not intended to limit the scope of the present disclosed example.

Step S33: the processing unit 10 retrieves each original color defect image 821 and each color smooth defect image 83 generated by the smoothing process, and merge each original color defect image 821 with each color smooth defect image 83 according to an image range of each defect image 720-722 in the surface variation image being processed (the process may comprise the dilation process and the smoothing process) for generating a mergence color defect image 84.

More specifically, the processing unit 10 respectively configures a merging range (such as the broken line part shown in FIG. 12) in the color facial image 80 and the color facial image 80 being processed according to each defect image 720-722 in the surface variation image, and executes the mergence (such as basing on the mean pixel process) on the image in the range.

Furthermore, when all of the defects are processed completely, the processing unit 10 may generate the concealer image of whole face (namely the above-mentioned simulation image 6).

One of the exemplary embodiments, the processing unit 10 is configured to configure the merging range according to the whole surface variation image 70, and merge the color facial image 80 with the color facial image 80 being processed based on the merging range for generating the concealer image of a whole face (such as the simulation image 6).

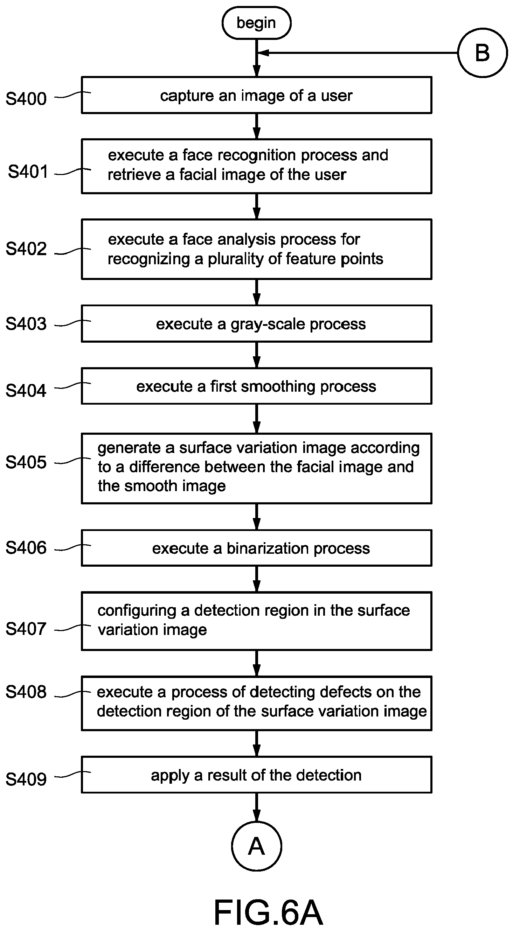

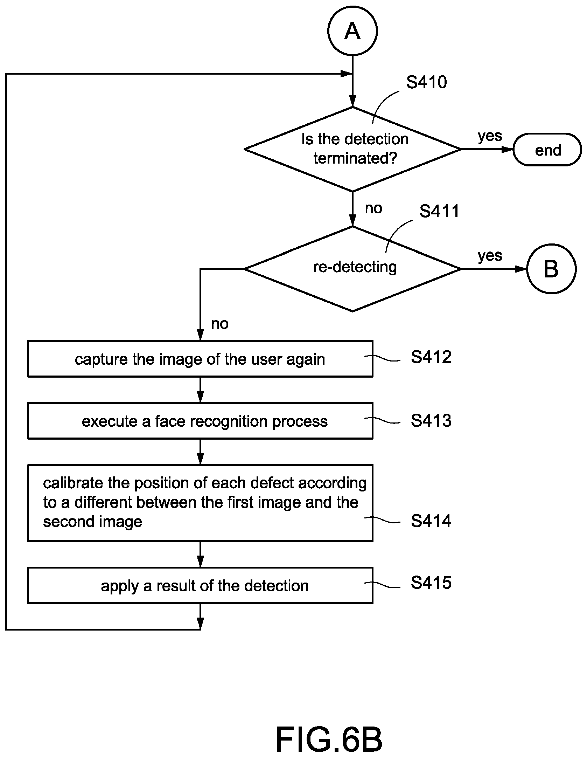

Please refer to FIG. 6A and FIG. 6B simultaneously, FIG.6A is a first flowchart of a method of detecting defects on face automatically according to the fourth embodiment of the present disclosed example, and FIG.6B is a second flowchart of a method of detecting defects on face automatically according to the fourth embodiment of the present disclosed example. The method of detecting defects on face automatically of this embodiment comprises following steps.

Step S400: the processing unit 10 controls the image capture module 12 to capture toward the front side of the mirror glass continuously for continuously obtaining the front mirror images (namely, the first images) with a wider field of view, and continuously executing detection on the front mirror images for determining whether there is any human being captured. The processing unit 10 stores the user's first images when detection of the user is located in front of the smart mirror apparatus 1.

Step S401: the processing unit 10 executes the face recognition process on the first images for recognizing the user's face in the first images, and retrieves the user's facial image.

Step S402: the processing unit 10 executes the face analysis process on the retrieved facial image for recognizing a plurality of feature points respectively corresponding to the different organs of the face of the user in the facial image.

For example, the processing unit 10 may recognize a plurality of eye feature points corresponding to the eyes of the user, a plurality of mouth feature points corresponding to the mouth of the user, and a plurality of facial contour feature points corresponding to the facial contour of the user.

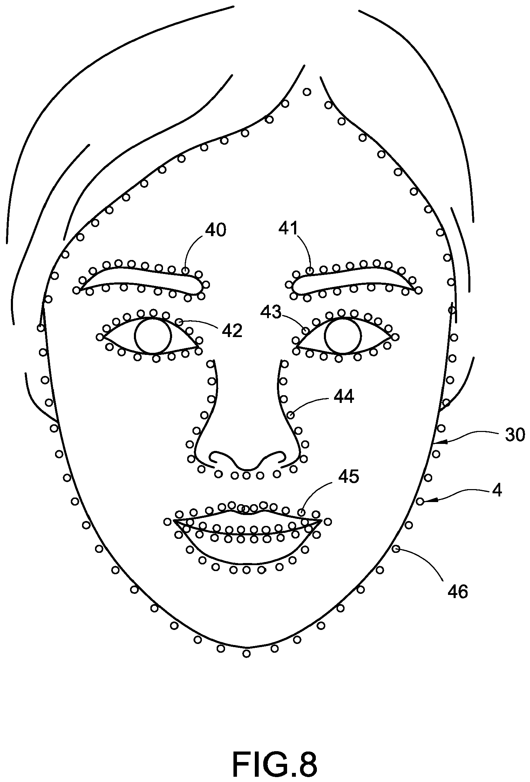

Please refer to FIG. 8, which is a schematic view of a face analysis process according to one of the embodiments of the present disclosed example. More specifically. above-mentioned face analysis process is configured to analyze the facial image 30 via execution of the Face Feature Landmark Algorithm for determining a position of the feature of the designated part in the facial image 30 (take eyebrow, eyes, nose, mouth and face contour for example in the FIG. 8), recognizing a plurality of feature points of each part. Above-mentioned each feature point respectively corresponds the different feature of the designated part. Furthermore, above-mentioned Face Landmark Algorithm is implemented by the DlibLibrary.

Take recognition of eyebrows, eyes, nose, and mouth for example, the feature points may respectively correspond to eyebrow peak, eyebrow head and/or eyebrow tail of the eyebrow, eye head and/or eye tail of the eyes, nose bridge and/or nose wings of the nose, mouth corners and/or lip peak of the mouth. A number of above-mentioned feature points may be 68, 198 or the other number, but this specific example is not intended to limit the scope of the present disclosed example.

Furthermore, above-mentioned Face Feature Landmark Algorithm may further mark a plurality of feature points of the specific part(s) on the facial image 30. As shown in FIG. 8, the feature point 40 of the right eyebrow, the feature point 41 of the left eyebrow, the feature point 42 of the right eye, the feature point 43 of the left eye, the feature point 44 of the nose, the feature point 45 of the mouth and the feature point 46 of the facial contour.

One of the exemplary embodiments, the processing unit 10 may number each feature point according to the part which the feature point belongs and/or the feature which the feature point corresponds. Thus, the present disclosed example can determine the position of each part in the facial image according to the number, shape, order and the other information of each feature point for recognizing the specific part(s).

Step S403: the processing unit 10 executes a gray-scale process on the facial image for generating the facial image being gray-scaled. Please be noted that above gray-scale process has the ability to filter the color noise out, so as to improve the accuracy of following image recognition.

Step S404: the processing unit 10 executes the smoothing process (namely, the first smoothing process) on the gray-scaled facial image for generating the smooth image being gray-scaled.

Step S405: the processing unit 10 generates the surface variation image being gray-scaled according to the difference between the gray-scaled facial image and the gray-scaled smooth image.

One of the exemplary embodiments, the processing unit 10 is configured to obtains the surface variation image by executing the process of image subtraction on the gray-scaled facial image and the gray-scaled smooth image.

Step S406: the processing unit 10 executes the binarization process on the gray-scaled surface variation image for obtaining the binary surface variation image. Please be noted that above binarization process has the ability to filter the noises of light and shadow out, so as to improve the accuracy of following image recognition.

Step S407: the processing unit 10 configures a detection region in the binary surface variation image, above detection region excludes the eyebrow region, the nose region, the eye region, the mouth region and/or the other regions with the not-obvious defect or without any defect.

One of the exemplary embodiments, the processing unit 10 configures the whole face region of the surface variation image as the detection region, and excludes one or more default exclusion region(s). As shown in FIG. 11, the processing unit 10 may configure a region surrounded by a plurality of facial contour feature points as the detection region, and make the detection region exclude the eye region surrounded by a plurality of eye feature points, the mouth region surrounded by a plurality of mouth feature points, the noise region surrounded by a plurality of noise feature points, and or the eyebrow region surrounded by a plurality of eyebrow feature points.

More specifically, because the eyes, the mouth, the noise, and the eyebrows do not comprise the defect (even there is a defect on them, the defect is not-obvious), the detection on these parts is redundant. The present disclosed example can effectively reduce the computation of the following detection via excluding these regions in advance, and shorten the time spent on computation.

Step S408: the processing unit 10 executes a process of detecting defects on the detection region of the surface variation image for recognizing the defect(s) in the surface variation image, and stores the defect position of each defect.

Step S409: the processing unit 10 executes the designated application according to the defect position of each defect, such as above-mentioned function of marking defects and function of concealing defects.

Step S410: the processing unit 10 determines whether the process of detecting defects should be terminated, such as the user disables the function of detecting defects or turns the smart mirror apparatus 1 off.

If the processing unit 10 determines that the process of detecting defects should be terminated, finishes the execution of the method of detecting defects on face automatically. Otherwise, the processing unit 10 performs step S411.

Step S411: the processing unit 10 determines whether there is a need to re-execute the detection.

More specifically, to the same user, the position of each defect will not be changed in a short time that the user uses the mirror. Under this premise, the defect positions obtained by repeated execution of the same defect detection will be the same as/close to each other, and there are the unnecessary computation and usage of storage resource of the smart mirror apparatus 1.

Thus, the present disclosed example further provides a function of compensating the defect positions, during implement of above function, the processing unit 10 may calibrate the defect positions in a way of compensation (by performing steps S412-S415 described later) when determining that a default re-detection condition doesn't satisfy, and obtain the defect positions corresponding to the current facial image without repeated executions of above-mentioned detection and analysis process.

Furthermore, the processing unit 10 performs above steps S400-S411 again for re-executing the defect detection when determining that the re-detection condition satisfies.

Above-mentioned re-detection condition may comprise at least one of the user leaving, the user changing, a default time elapsing and so on, but this specific example is not intended to limit the scope of the present disclosed example.

Then, the function of compensating the defect positions of the present disclosed example will be described. Step S412: the processing unit 10 captures the user again by the image capture module 12 for obtaining another front mirror image (namely the second image).

Step S413: the processing unit 10 executes the face recognition process on the second image for recognizing a position of the facial image in the second image.

Step S414: the processing unit 10 calibrates the position of each defect according to a difference between the position of the facial image in the front mirror image photographed previously (such as the first image for defect detection captured in the step S400 or the second image photographed last time) and the position of the facial image in the second image photographed currently for obtaining the position of each defect in the newest second image.

One of the exemplary embodiments, the processing unit computes a shift vector of the facial image between the two images, and adds the shift vector to the defect position of each defect for completion of the compensation correction of defect positions.

Step S415: the processing unit 10 executes the designated application according to the defect position of each defect after compensation correction, such as above-mentioned function of marking defects and function of concealing defects.

Thus, the present disclosed example can reduce the usage of storage space resource and computing resource of the smart mirror apparatus 1 effectively.

## Claims

1. A method of detecting defects on face automatically, the method being applied to a smart mirror apparatus (1) comprising an image capture module (12) and a processing unit (10), the method comprising following steps:
a) capturing a facial image (30) of a user (2) by the image capture module (12) when the user (2) is standing in front of the smart mirror apparatus (1);
b) executing a first smoothing process on the facial image (30) by the processing unit (10) for generating a smooth image;
c) generating a surface variation image (70) according to a difference between the facial image (30) and the smooth image; and
d) executing a process of detecting defects on the surface variation image (70) for recognizing at least one defect in the surface variation image (70), and recording a position of each defect.

2. The method of detecting defects on face automatically of claim 1, wherein the smart mirror apparatus (1) further comprises a display module (11), the method further comprises following steps:
e1) marking each defect at a relative position of the facial image (30) according to the position of each defect in the surface variation image (70) under a mode of marking defects; and
e2) displaying the facial image (30) being marked on the display module (11) in a way of Augmented Reality.

3. The method of detecting defects on face automatically of claim 1, wherein the smart mirror apparatus (1) further comprises a display module (11), the method further comprises following steps:
f1) executing a process of concealing defects on the facial image (30) according to the position of each defect in the surface variation image (70) for generating a concealer image under a concealing mode; and
f2) displaying the concealer image on the display module (11) in a way of Augmented Reality.

4. The method of detecting defects on face automatically of claim 3, wherein the process of concealing defects comprises following steps:
g1) executing a dilation process on an image of each defect in the surface variation image (70) for expanding an image area of each defect in the surface variation image (70);
g2) executing a second smoothing process on the image of each defect being expanded in the surface variation image (70) for smoothing the image of each defect in the surface variation image (70);
g3) executing a third smoothing process on the image of each defect in the facial image (30) for smoothing the image of each defect in the facial image (30); and
g4) merging the facial image (30) and the facial image (30) after the third smoothing process into the concealer image according to a range of each defect in the surface variation image (70) after the second smoothing process.

5. The method of detecting defects on face automatically of claim 1, further comprising a step h) performed before the step b) and step c) executing a gray-scale process on the facial image (30) for generating the facial image (30) being gray-scaled;
the step b) is performed to execute the first smoothing process on the facial image (30) being gray-scaled for generating the smooth image being gray-scaled;
the step c) is performed to generate the surface variation image (70) being gray-scaled according to a difference between the facial image (30) being gray-scaled and the smooth image being gray-scale.

6. The method of detecting defects on face automatically of claim 5, further comprising a step i) performed after the step c) and before the step d) executing a binarization process on the surface variation image (70) being gray-scaled for obtaining the surface variation image (70) being binary;
the step d) is performed to execute the process of detecting defects on the surface variation image (70) being binary.

7. The method of detecting defects on face automatically of claim 1, further comprising a step j) performed after the step c) and before the step d) configuring a detection region in the surface variation image (70);
wherein the detection region excludes at least eye region and mouth region.

8. The method of detecting defects on face automatically of claim 7, wherein the detection region further excludes a nose region and an eyebrow region.

9. The method of detecting defects on face automatically of claim 7, wherein the step a) comprises following steps:
a1) capturing a first image of the user (2) by the image capture module (12) when the user (2) is standing in front of the smart mirror apparatus (1); and
a2) executing a face recognition process on the first image for recognizing and retrieving the facial image of the user (2).

10. The method of detecting defects on face automatically of claim 9, further comprising a step k) performed before the step j) executing a face analysis process on the facial image (30) for recognizing a plurality of eye feature points (42, 43) corresponding to eyes of the user (2), a plurality of mouth feature points corresponding to mouth of the user (2), and a plurality of face contour feature points (46) corresponding to face contour of the user (2);
the step j) is performed to configure a region surrounded by the face contour feature points (46) as the detection region, and exclude the eye region surrounded by the eye feature points (42,43) and the mouth region surrounded by the mouth feature points from the detection region.

11. The method of detecting defects on face automatically of claim 9, further comprising following steps:
l1) capturing a second image of the user (2) by the image capture module (12);
l2) executing the face-recognizing process on the second image for recognizing a position of the facial image (30) in the second image;
l3) calibrating the position of each defect according to a difference between the position of the facial image (30) in the first image and the position of the facial image (30) in the second image for obtaining a position of each defect in the facial image (30) of the second image.
